# EUROPEAN PATENT APPLICATION

(11) **EP 2 813 692 A2**
(43) Date of publication of application: **17.12.2014**
(21) Application number: 14170090.6
(22) Date of filing: 27.05.2014
(51) Int. Cl.: F02D 41/14, F02B 37/24

(54) **Variable geometry turbocharger control system**

(30) Priority: 11.06.2013 US 201313914776
(71) Applicant: DEERE & COMPANY, Moline, Illinois 61265-8098 (US)
(72) Inventor: Piper, Erik L, Cedar Falls, IA Iowa 50613 (US); Chase, Scott A, Cedar Falls, IA Iowa 50613 (US); Evers, Matthew R, Cedar Falls, IA Iowa 50613 (US); Lahti, John L, Cedar Falls, IA Iowa 50613 (US); Ridenour, Dustin W, Independence, IA Iowa 50644 (US)
(74) Representative: Lange, Robert

(57) **Abstract**

The disclosure relates to a control system for a turbo-charged engine having a variable geometry turbine driving a compressor.

## Description

The present disclosure relates to a control system for controlling a turbocharger with a variable geometry turbine.

A variable-geometry turbocharger (VGT) can be used to allow the effective aspect ratio (A/R) of the turbo to be altered as conditions change. In an increasing transient loading condition, transient response is limited by turbocharger lag, as the fuel system response is much quicker. It would be desirable to set the VGT position in order to provide boost to the engine at the highest rate possible, thus maximizing transient response and limiting smoke production.

According to an aspect of the present disclosure, a turbo-charged engine has a variable geometry turbine driving a compressor. An intake manifold receives intake air from the compressor, and an exhaust manifold supplies exhaust to an input of the variable geometry turbine. It was determined that the maximum turbine power can be determined experimentally or by simulation as a function of corrected exhaust flow, where corrected exhaust flow is equal to exhaust flow (gps) X (exhaust temperature (C) +273.15)^{1/2} / exhaust manifold pressure (abs kPa). This can then be calibrated in the engine controller and used in the actuator control. The control system can detect the need for a fuel to air ratio that is above a calibrated point transitioning closer or at the max turbine power set point.
Fig. 1 is a schematic block diagram of a control system embodying the invention;
Fig. 2 is a flow chart of an algorithm performed by control system of Fig. 1; and
Fig. 3 is a look-up table used with the algorithm of Fig. 2.

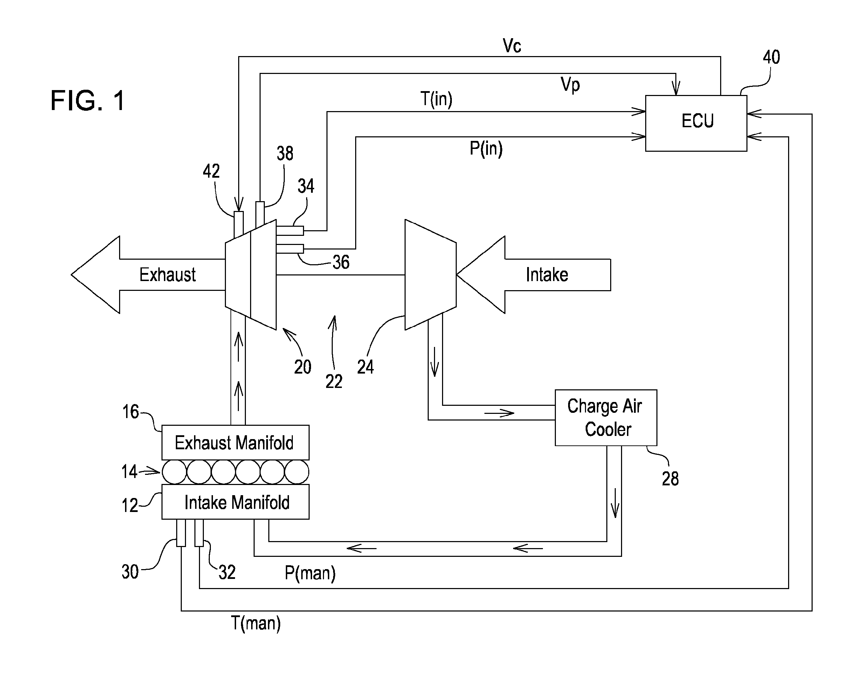

Referring to Fig. 1, an engine, such as a Diesel engine, includes an intake manifold 12 which supplies combustion air to the cylinders 14. Exhaust from the cylinders 14 is collected by an exhaust manifold 16 which conducts the exhaust to the turbine 20 of a variable geometry turbo charger 22. Turbine 20 drives a compressor 24 which receives intake air from an engine air intake 26. The compressor 24 supplies compressed intake air to an optional charger air cooler 28 and then to the intake manifold 12. The variable geometry turbocharger (VGT) is preferably a commercially available unit, such as manufactured by Honeywell or Borg Warner. Alternatively, the turbocharger 22 could be a series type turbocharger, and the charge air cooler is optional.

A temperature sensor 30 senses the temperature T(man) of the compressed intake air at the intake manifold 12. A pressure sensor 32 senses the pressure P(man) of the compressed intake air at the intake manifold 12. A temperature sensor 34 senses the temperature T(in) of the exhaust at an inlet of the turbine 20. A pressure sensor 36 senses the pressure P(in) of the exhaust at an inlet of the turbine 20. A position sensor 38 senses the position Vp of the vane (not shown) of the variable geometry turbo charger 22. The signals from sensors 30-38 are received by the electronic control unit (ECU) 40. The ECU generates a variable turbine geometry control signal Vc which is communicated to a vane position control input 42 of the turbine 20.

The ECU 40 also receives a requested fueling signal, RF, and a maximum fueling signal, MF. RF is preferably derived from a user input, such as a throttle position or pedal position, or from pedal position translated to a speed command which then results in a fueling commanded by a speed control algorithm (all speed governor) (not shown). MF is preferably derived from existing smoke limiting algorithms (not shown) which are designed to limit the engine's smoke output by only allowing a quantity of fuel to be injected that can be burned without resulting in excessive smoke.

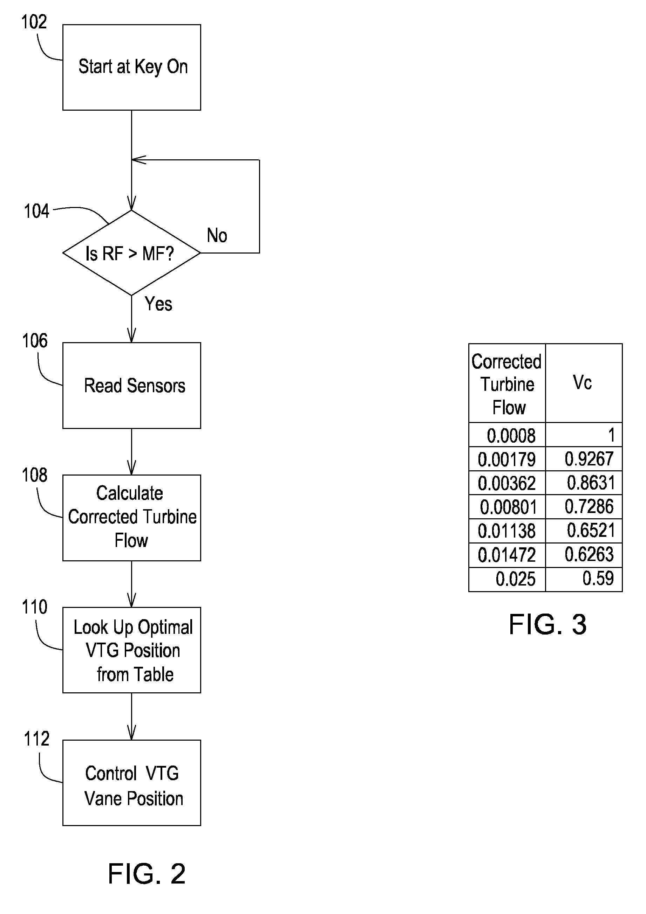

The ECU 40 executes an algorithm 100 represented by Fig. 2. The conversion of this flow chart into a standard language for implementing the algorithm described by the flow chart in a digital computer or microprocessor, will be evident to one with ordinary skill in the art.

The algorithm starts at step 102 when the engine is started.

In step 104 requested fueling, RF is compared to maximum fueling, MF. If RF is greater than MF, the algorithm proceed to step 106, otherwise the algorithm keeps comparing RF to MF.

In step 106 the sensors 30-36 are read, and then step 108 calculates a corrected turbine mass flow value, FLOW, according to the equation FLOW = mᵢₙ X (T(in))^{1/2} / P(in), where mᵢₙ is estimated mass flow rate of exhaust through the turbine 20. This mass flow rate mᵢₙ is preferably determined by a well known method using the turbine inlet temperature from sensor 34, the turbine inlet pressure from sensor 36 and the fuel rate which is supplied by an engine control (not shown). Alternatively, the turbine mass flow could be determined by using a fresh air measurement plus estimated fueling along with a direct measurement of turbine inlet temperature and pressure. In a system with EGR, this speed density mass flow measurement would be combined with EGR flow measurement. Alternatively, this could also be done with a mass air flow sensor.

In step 110, the corrected value calculated in step 108 is used with a look-up table, such as shown in Fig. 3, to determine the optimal variable turbine geometry vane position.

Referring now to Fig. 3, Fig. 3 shows a look-up table wherein values of corrected turbine mass flow are associated with corresponding optimal variable turbine geometry vane position values. The vane control signal Vc is the selected optimal variable turbine geometry vane position value.

Returning to Fig. 2, step 112 controls variable turbine geometry vane position using the optimal vane position value obtained from Fig. 3 and the vane position feedback value from sensor 38. The conversion of the above flow chart into a standard language for implementing the algorithm described by the flow chart in a digital computer or microprocessor, will be evident to one with ordinary skill in the art.

Thus, this system determines an optimal variable turbine geometry vane position values as a function of sensed parameters. Such parameters include fueling-related parameters, and intake manifold air temperature and pressure

The result is a system which optimizes boost control during a load increasing transient. The system determines the variable geometry turbine set point that provides the maximum turbine power available to the compressor to build boost air. With the onset of a load increase, fuel increases faster than air flow can increase to match. Commanding the variable geometry turbine set point closer to or at the maximum turbine power allows the increase in airflow to better match the increase in fuel flow, provided improved combustion efficiency and reduced smoke.

During steady state conditions the set points for the variable geometry turbine is typically set to achieve emission and torque at the best fuel consumption solution.

This variable geometry turbine set point is typically not at the maximum turbine power available.

## Claims

1. A turbo-charged engine having a variable geometry turbine driving a compressor, an intake manifold receiving intake air from the compressor, an exhaust manifold for supplying exhaust to an input of the variable geometry turbine, and a control system comprising:
an intake manifold temperature sensor for sensing an intake manifold temperature T(man);
an intake manifold pressure sensor for sensing an intake manifold pressure P(man);
a turbine inlet temperature sensor for sensing a turbine inlet temperature T(in);
a turbine inlet pressure sensor for sensing a turbine inlet pressure P(in); and
a control unit for generating a vane position control signal which is applied to a vane control input of the variable geometry turbine, the control unit generating the vane position control signal as a function of turbine inlet temperature and turbine inlet pressure.

2. The turbo-charged engine according to claim 1, wherein:
the control unit determines an estimated mass flow rate min of exhaust through the turbine as a function sensed turbine inlet temperature, turbine inlet pressure and a fuel rate; and
the control unit generating a corrected mass flow rate value by the equation mᵢₙ X (T(in))^{1/2} / P(in); and
the control unit determines the vane position control signal as a function of the corrected mass flow rate value.

3. The turbo-charged engine according to claim 2, further comprising:
a turbine vane position sensor, the control unit controlling turbine vane position as a function of the vane position control signal and sensed vane position.

4. The turbo-charged engine according to one of the claims 1 to 3, wherein the control unit determines an estimated mass flow rate mᵢₙ of exhaust through the turbine as a function sensed turbine inlet temperature, turbine inlet pressure and a fuel rate; and
the control unit generating a corrected mass flow rate value by the equation mᵢₙ X (T(in))^{1/2} / P(in); and
the control unit determines the vane position control signal from a look-up table which associates a plurality of corrected mass flow rate values with a plurality of optimal vane position values.

5. The turbo-charged engine according to one of the claims 1 to 4, further comprising:
a turbine vane position sensor, the control unit controlling turbine vane position as a function of the vane position control signal and sensed vane position.

6. The turbo-charged engine according to one of the claims 1 to 5, further comprising:
a charge air cooler between the compressor and the intake manifold.

7. The turbo-charged engine according to one of the claims 1 to 6, the control unit prevents generation of the corrected mass flow rate value if a requested fueling is not greater than a maximum fueling.
